# FASCICULE DE BREVET EUROPEEN

(11) **EP 1 053 822 B1**
(45) Date de publication et mention de la délivrance du brevet: **28.12.2005**
(21) Numéro de dépôt: 00401383.5
(22) Date de dépôt: 19.05.2000
(51) Int. Cl.: B23K 26/00, B23K 13/01

(54) **Procédé pour l'assemblage par soudage de deux éléments en acier de forte teneur en carbone et outil de chauffage pour un tel procédé**
Schweissverfahren zum Verbinden von zweien Elementen aus Hochkohlenstoff-Stahl und Erwärmungsgerät für ein solches Verfahren
Process for assembling of two high carbon content steel elements by welding and heating tool for such a process

(30) Priorité: 21.05.1999 FR 9906460
(43) Date de publication de la demande: 22.11.2000
(73) Titulaire: Renault s.a.s., 92100 Boulogne Billancourt (FR); Saet S.p.A., 10040 Leini (TO) (IT); Prismeca, 33600 Pessac (FR)
(72) Inventeur: Criqui, Bernard, 92150 Suresnes (FR); Chevre, Pascal, 33600 Pessac (FR); Bonzano, Giorgio, 10040 Leini (TO) (IT)
(74) Mandataire: Srour, Elie

(56) Documents cités:
- DE-C- 968 733
- DE-C- 19 637 465
- GB-A- 383 859
- US-A- 5 140 123

## Description

L'invention concerne un procédé pour l'assemblage par soudage de deux éléments en acier, et un outil de chauffage par induction destiné à être mis en oeuvre dans un tel procédé.

L'invention concerne plus particulièrement un procédé pour l'assemblage par soudage de deux éléments en acier d'une teneur en carbone supérieure à 0,42%.

On connaît de nombreux procédés d'assemblage par soudage de deux éléments en acier, par exemple dans les documents DE-C1-196 37 465 et DE-A 968 733.

Lorsque l'on désire assembler ensemble deux éléments en acier comportant une teneur en carbone supérieure à 0,42%, notamment à l'aide d'un outil de soudage au laser, la haute température du faisceau laser dans la zone de soudage, proche de 1500°C, provoque la formation de martensite dans la zone de soudage. La présence de cette martensite aboutit, lors du refroidissement qui suit, à la formation de criques qui fragilisent la soudure ainsi réalisée.

Pour remédier à cet inconvénient, on a envisagé de n'assembler ensemble que des éléments présentant une teneur en carbone inférieure à 0.42%.

L'inconvénient de l'emploi de tels éléments est que la faible teneur en carbone des aciers employés ne permet pas d'obtenir une dureté Vickers supérieure à HV630, tandis que, pour certaines applications, notamment la réalisation de dents d'engrenages, une dureté Vickers supérieure à HV 750 est requise.

On a alors proposé d'utiliser des matériaux comportant une teneur en carbone supérieure à 0,42%, et d'empêcher la formation de martensite dans les éléments à assembler en les préchauffant et/ou les post-chauffant globalement.

L'inconvénient d'une telle solution est que le préchauffage et/ou le post-chauffage global des éléments à assembler provoque des déformations de l'assemblage du fait de la détente des contraintes, et il nécessite des temps de fabrication très longs, ce qui rend ce procédé difficilement applicable à une fabrication en grande série.

Pour remédier à ces inconvénients, l'invention propose un procédé selon la revendication 1.

Selon d'autres caractéristiques du procédé selon l'invention :
- le procédé comporte une étape de préchauffage, préalable à l'étape de soudage, à l'aide de l'outil de chauffage par induction fonctionnant à une fréquence comprise entre 2,5 à 10 kHz pendant une durée d'environ 5s, de la zone de soudage à une température supérieure à 300°C pour relâcher les contraintes internes dans la zone de soudage,
- le procédé comporte une étape de post-chauffage, qui fait suite à l'étape de soudage, à l'aide de l'outil de chauffage par induction fonctionnant à une fréquence comprise entre 2,5 à 10 kHz pendant une durée d'environ 5s, de la zone de soudage à une température supérieure à 300°C pour induire une étape ultérieure longue de refroidissement qui permet d'éviter la formation de martensite dans la zone de soudage,
- lors de l'étape de soudage à l'aide de l'outil de soudage au laser, on soude les éléments dans la zone de soudage à une température de 1500°C pendant 2s et sur une profondeur de 5mm,
- entre l'étape de préchauffage et l'étape de soudage, on substitue instantanément l'outil de soudage au laser à l'outil de chauffage par induction, et, entre l'étape de soudage et l'étape de post-chauffage, on substitue instantanément l'outil de chauffage par induction à l'outil de soudage au laser pour que la température de la zone de soudage évolue de façon continue,
- au cours des étapes de préchauffage, de soudage, et de post-chauffage on utilise un seul outil mixte de chauffage par induction et de soudage au laser.

L'invention propose aussi un outil de chauffage par induction, selon la revendication 5.

Selon d'autres caractéristiques de l'outil de chauffage :
- le noyau est sensiblement annulaire et comporte une partie tronconique dont le plus petit diamètre est sensiblement égal au diamètre moyen de la zone de soudage,
- le noyau est en cuivre et il comporte dans son épaisseur au moins un canal annulaire de refroidissement par circulation d'eau,
- l'inducteur comporte une culasse annulaire, en matériau à forte perméabilité magnétique, à l'intérieur de laquelle est agencé le noyau, et à partir de laquelle la partie tronconique du noyau fait saillie axialement et radialement vers l'axe des éléments coaxiaux,
- l'inducteur comporte dans sa section annulaire un évidement qui est destiné à permettre le passage d'un faisceau laser en provenance de l'outil de soudage au laser,
- des fils d'arrivée du courant électrique d'alimentation de l'inducteur sont agencés de part et d'autre de l'évidement,
- l'outil de chauffage comporte l'outil de soudage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'une étape du procédé au cours de laquelle un outil de chauffage réalise, conformément à l'invention, un préchauffage et/ou un post-chauffage de la zone de soudage des éléments à assembler ;
- la figure 2 est une vue d'une étape du procédé au cours de laquelle un outil de soudage réalise, conformément à l'invention, le soudage des éléments à assembler ;
- la figure 3 est un diagramme représentant la variation de la température de la zone de soudage en fonction du temps.
- la figure 4 est une vue axiale en bout d'un second mode de réalisation d'un outil de chauffage qui comporte l'outil de soudage ; et
- la figure 5 est une vue en coupe axiale de l'outil selon la figure 4 représenté en position de préchauffage, de post-chauffage et /ou de soudage des éléments.

Dans la description qui va suivre, des chiffres de référence identiques désignent des pièces identiques ou ayant des fonctions similaires.

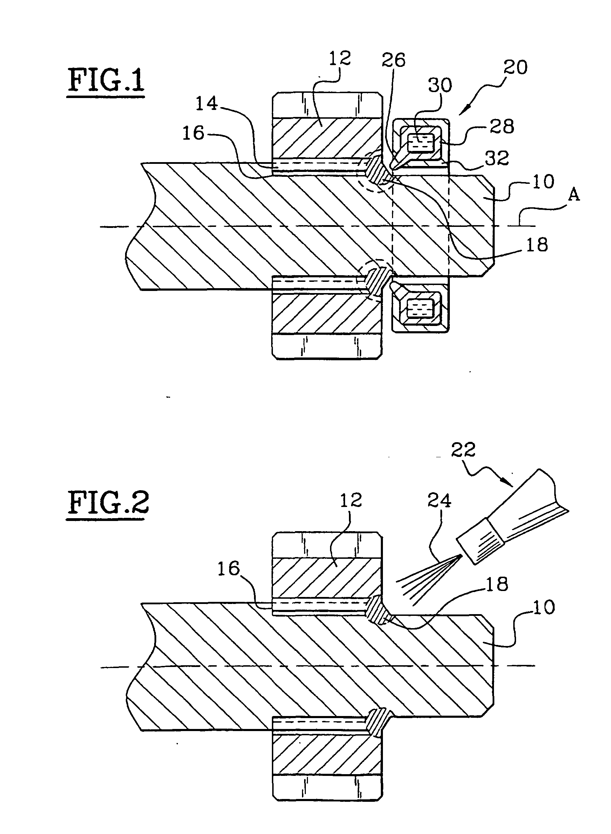

On a représenté aux figures 1 et 2 deux étapes consécutives d'un procédé d'assemblage par soudage de deux éléments en acier d'une teneur en carbone supérieure à 0,42 % conformément à l'invention.

Dans le mode de réalisation préféré de l'invention, le procédé de l'assemblage par soudage est destiné à assembler deux éléments cylindriques 10 et 12, coaxiaux d'axe A, notamment une roue dentée 12 qui est emmanchée sur des cannelures 14 d'un arbre cannelé 10 et qui sont représentés en section axiale.

Lors d'une étape préliminaire à la mise en oeuvre du procédé, la roue dentée 12 est enfilée axialement sur les cannelures 14 de l'arbre 10.

La roue dentée 12 est arrêtée axialement par rapport à l'arbre 10 dans un sens par un épaulement 16 de l'arbre 10 contre lequel elle est en butée axiale, et dans l'autre sens par une soudure 18 qui est réalisée à l'opposé de l'épaulement 16 de l'arbre 10 par rapport à la roue dentée 12.

Conformément à l'invention, l'assemblage par soudage de la roue dentée 12 à l'arbre 10 comporte au moins une étape de chauffage de la zone de soudage 18 qui est représentée à la figure 1, et une étape de soudage de la zone de soudage 18, qui est représentée à la figure 2.

L'étape de chauffage met en oeuvre un outil 20 de chauffage par induction et l'étape de soudage met en oeuvre un outil 22 de soudage au laser, notamment une torche de soudage.

Conformément à l'invention, l'étape de chauffage selon le procédé est une étape de préchauffage préalable au soudage par l'outil de soudage 22, ou une étape de post-chauffage de la zone de soudage 18 qui est consécutive à l'étape de soudage par l'outil de soudage 22.

Toutefois, dans le mode de réalisation préféré de l'invention, le procédé comporte deux étapes de chauffage, c'est-à-dire une étape de préchauffage qui est destinée à relâcher les contraintes internes de la zone de soudage 18 avant l'étape de soudage 18 proprement dite, et une étape de post-chauffage qui fait suite à l'étape de soudage et qui est destinée à induire une étape ultérieure longue de refroidissement qui permet d'éviter la formation de martensite dans la soudure 18.

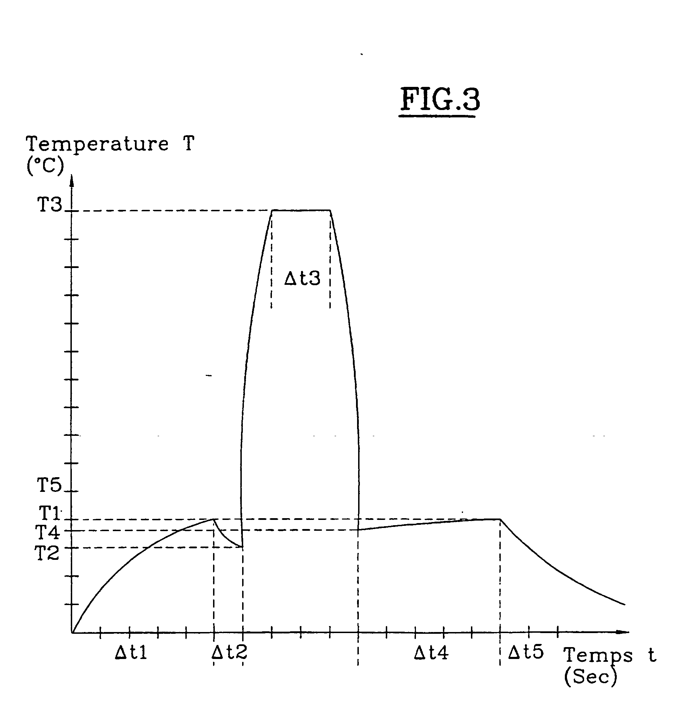

Comme l'illustre la figure 3, l'étape de préchauffage met en oeuvre l'outil de chauffage 20 par induction fonctionnant à une fréquence comprise entre 2,5 et 10 kHz pendant une durée Δt₁ d'environ 5 secondes et à une température T₁ supérieure à 300°C.

On substitue alors, en une durée Δt₂ très courte, l'outil de soudage 22 au laser à l'outil de chauffage 20 de façon que la température T de la zone 18 de soudure ne retombe pas en dessous d'une température T₂ déterminée proche de T₁. On soude alors les éléments, notamment la roue dentée 12 à l'arbre 10, à l'aide de l'outil 22 de soudage au laser dont le faisceau 24 permet de porter la zone de soudage 18 à une température T₃ de l'ordre 1500°C pendant une durée Δt₃ d'environ deux secondes, et sur une profondeur de 5 mm.

Ensuite, on substitue l'outil de chauffage 20 à l'outil de soudage 22 et on réalise, pendant une durée Δt₄ d'environ 5 secondes, un post-chauffage de la zone de soudage 18 à l'aide de l'outil de chauffage 20 par induction qui fonctionne à une fréquence comprise entre 2,5 et 10 kHz de façon que la zone de soudage soit maintenue à une température T₅ supérieure à 300°C.

Enfin, on laisse la température T de la zone de soudage 18 redescendre en un temps long Δt₅ jusqu'à la température ambiante.

Avantageusement, comme on l'a décrit plus haut, entre l'étape de préchauffage et l'étape de soudage, on substitue quasi instantanément l'outil de soudage 22 au laser à l'outil de chauffage 20 par induction, et entre l'étape de soudage et l'étape de post-chauffage, on substitue quasi instantanément l'outil de chauffage 20 par induction à l'outil de soudage 22 au laser de façon que la température T de la zone de soudage 18 évolue de façon sensiblement continue.

De la sorte, il n'y a, tout au long du procédé de fabrication, pas de chute brutale de la température T de la zone de soudage 18 ce qui permet d'éviter l'apparition de contraintes internes dans la zone de soudage 18 du matériau et donc l'apparition de criques ou de retassures, par opposition à un procédé de soudage conventionnel au cours duquel les temps de changement d'outil nuisent à la qualité de la soudure réalisée. Ainsi, la zone de soudage 18 ne se trouve pas fragilisée.

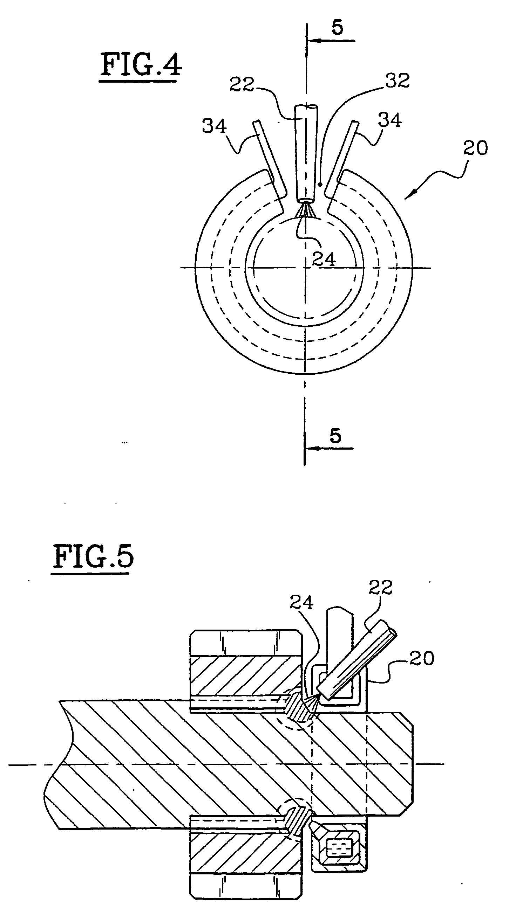

La figure 1 d'une part, et les figures 4 et 5 d'autre part, illustrent deux modes de réalisation d'un outil 20 de chauffage destiné à être mis en oeuvre dans le procédé de l'invention.

Comme l'illustre la figure 1, l'outil de préchauffage/post-chauffage par induction 20 est un inducteur annulaire 20 dont au moins une partie 26 d'un noyau 28 fait saillie axialement et radialement vers l'axe A de l'arbre 10 et du pignon 12 pour obtenir un échauffement local de la seule zone de soudage 18.

La partie 26 en saillie du noyau 20 est agencée à proximité immédiate de la zone de soudage 18.

A cet effet, la partie 26 en saillie du noyau est sensiblement tronconique et son plus petit diamètre est sensiblement égal au diamètre moyen de la zone de soudage 18.

Le noyau 28 est en cuivre et il comporte dans son épaisseur au moins un canal 30 annulaire de refroidissement par circulation d'eau.

Enfin, le noyau 28 est entouré par une culasse annulaire 32 qui est réalisée en un matériau à forte perméabilité magnétique de façon à limiter les fuites magnétiques et à concentrer les champs magnétiques dans le noyau 28 et dans sa partie 26 en saillie.

Comme l'illustrent les figures 4 et 5, dans un second mode de réalisation de l'outil 20 de préchauffage/post-chauffage, l'inducteur 20 peut comporter dans sa section annulaire un évidement 32 qui est destiné à permettre le passage du faisceau laser 24 en provenance de l'outil 22 de soudage au laser.

Avantageusement, des fils d'arrivée 34 du courant électrique peuvent être agencés de part et d'autre de l'évidement 32 de l'inducteur de façon à réduire son encombrement axial.

Cette disposition est particulièrement avantageuse car elle permet de ne pas déplacer l'inducteur annulaire 20 entre l'étape de préchauffage et l'étape de soudage d'une part, et entre l'étape de soudage et l'étape de post-chauffage d'autre part, ce qui permet de réduire considérablement les temps de passage de l'outil de préchauffage/post-chauffage à l'outil de soudage et donc de réduire les temps de fabrication, ce qui, dans le cadre d'une fabrication en grande série, permet d'abaisser sensiblement les coûts de réalisation de l'assemblage des éléments 10 et 12.

Selon une variante du second mode de réalisation de l'outil 20 de préchauffage/post-chauffage, l'outil de soudage 22 peut être lié mécaniquement à l'outil de chauffage 20 de sorte que, lors de la mise en place des outils 20 et 22 à proximité de la zone 18 de soudage, les deux outils sont mis en place en une seule opération et il ne nécessite aucun réglage de positionnement de l'outil de soudage 22 par rapport à l'outil de préchauffage/post-chauffage 20. La rapidité de la mise en place d'un tel outil mixte permet de diminuer encore sensiblement les temps de fabrication.

## Revendications

1. Procédé pour l'assemblage par soudage de deux éléments (10, 12) en acier d'une teneur en carbone supérieure à 0.42%, du type qui comporte au moins une étape de préchauffage, à l'aide d'un outil (20) de chauffage par induction, des deux éléments dans la seule zone (18) de soudage, et une étape de soudage à l'aide d'un outil (22) de soudage au laser, du type dans lequel l'étape de préchauffage préalable à l'étape de soudage est réalisée à l'aide de l'outil (20) de chauffage par induction fonctionnant à une fréquence comprise entre 2,5 à 10 kHz pendant une durée (Δt1) d'environ 5s, de la zone (18) de soudage à une température (T1) supérieure à 300°C pour relâcher les contraintes internes dans la zone (18) de soudage,
**caractérisé en ce qu'**il comporte une étape de post-chauffage, qui fait suite à l'étape de soudage, à l'aide de l'outil (20) de chauffage par induction fonctionnant à une fréquence comprise entre 2,5 à 10 kHz pendant une durée (Δt4) d'environ 5s, de la seule zone de soudage à une température (T5) supérieure à 300°C pour induire une étape ultérieure longue de refroidissement qui permet d'éviter la formation de martensite dans la zone (18) de soudage.

2. Procédé selon la revendication précédente, **caractérisé en ce que**, lors de l'étape de soudage à l'aide de l'outil (22) de soudage au laser, on soude les éléments (10, 12) dans la zone de soudage (18) à une température (T3) de 1500°C pendant (Δt3) 2s et sur une profondeur de 5mm.

3. Procédé selon la revendication précédente, **caractérisé en ce que**, entre l'étape de préchauffage et l'étape de soudage, on substitue instantanément l'outil de soudage (22) au laser à l'outil de chauffage (20) par induction et **en ce que**, entre l'étape de soudage et l'étape de post-chauffage, on substitue instantanément l'outil de chauffage (20) par induction à l'outil de soudage (22) au laser pour que la température (T) de la zone (18) de soudage évolue de façon continue.

4. Procédé selon la revendication 2, **caractérisé en ce qu'**au cours des étapes de préchauffage, de soudage, et de post-chauffage on utilise un seul outil mixte (20) de chauffage par induction et de soudage au laser.

5. Outil de chauffage par induction, pour la mise en oeuvre d'au moins une étape de chauffage du procédé selon les revendications 1 à 4 dans lequel deux éléments coaxiaux (12,14) cylindriques intérieur et extérieur qui sont destinés à être assemblés sont chauffés dans une zone de soudage (18) dans laquelle ils sont en contact, **caractérisé en ce qu'**il comporte un inducteur annulaire (20) dont au moins une partie (26) d'un noyau (28) fait saillie axialement et radialement vers l'axe (A) des éléments coaxiaux (10, 12) à proximité de la zone (18) de soudage de manière à obtenir un échauffement local seulement au voisinage de la zone (18) de soudage.

6. Outil de chauffage selon la revendication 5, **caractérisé en ce que** le noyau (28) est sensiblement annulaire et il comporte une partie tronconique (26) dont le plus petit diamètre est sensiblement égal au diamètre moyen de la zone (18) de soudage.

7. Outil de chauffage selon l'une des revendications 5 ou 6, **caractérisé en ce que** le noyau (28) est en cuivre et comporte dans son épaisseur au moins un canal (30) annulaire de refroidissement par circulation d'eau.

8. Outil de chauffage selon l'une des revendications 6 ou 7, **caractérisé en ce que** l'inducteur (20) comporte une culasse (32) annulaire en matériau à forte perméabilité magnétique, à l'intérieur de laquelle est agencé le noyau (28), et à partir de laquelle la partie (26) tronconique du noyau (28) fait saillie axialement et radialement vers l'axe (A) des éléments (10, 12) coaxiaux.

9. Outil de chauffage selon l'une quelconque des revendications 5 à 8, **caractérisé en ce que** l'inducteur (20) comporte dans sa section annulaire un évidement (32) qui est destiné à permettre le passage d'un faisceau laser (24) en provenance de l'outil (22) de soudage au laser, pour réduire les temps de changement d'outil associés aux étapes du procédé auquel l'outil est destiné.

10. Outil de chauffage selon la revendication 9, **caractérisé en ce que** des fils d'arrivée (34) du courant électrique d'alimentation de l'inducteur (20) sont agencés de part et d'autre de l'évidement (32).

11. Outil de chauffage selon l'une des revendications 9 ou 10, **caractérisé en ce qu'**il est lié mécaniquement à l'outil de soudage (22), pour réduire le temps de mise en place des outils avant le soudage des deux éléments (10, 12) auquel ils sont destinés.

## Patentansprüche

1. Verfahren zur Verbindung durch Schweißen von zwei Elementen (10, 12) aus Stahl eines Kohlenstoffgehalts größer als 0,42 %, von der Art, welches mindestens einen Schritt eines Vorheizens mit Hilfe eines Heizwerkzeuges (20) durch Induktion der zwei Elemente in der einzigen Schweißzone (18) aufweist und einen Schritt eines Schweißens mit Hilfe eines Laserschweißwerkzeuges (22), von der Art, bei welchem der Schritt des Vorheizens vor dem Schritt des Schweißens mit Hilfe des Heizwerkzeuges (20) durch Induktion realisiert wird, wobei es betrieben wird bei einer Frequenz zwischen 2,5 bis 10 kHz über eine Zeitdauer (Δt1) von in etwa 5 s der Schweißzone (18) bei einer Temperatur (T1) größer als 300° C, um die inneren Spannungen in der Schweißzone (18) zu entspannen,
**dadurch gekennzeichnet, dass** es einen Schritt eines Nachheizens aufweist, welcher auf den Schritt des Schweißens folgt, mit Hilfe des Heizwerkzeuges (20) durch Induktion, welches betrieben wird bei einer Frequenz zwischen 2,5 bis 10 kHz über eine Zeitdauer (Δt4) von in etwa 5 s, der einzigen Schweißzone bei einer Temperatur (T5) größer als 300° C, um einen nachfolgenden langen Abkühlungsschritt zu bewirken, welcher es erlaubt, die Bildung von Martensit in der Schweißzone (18) zu verhindern.

2. Verfahren nach dem vorangegangenen Anspruch, **dadurch gekennzeichnet, dass** man während dem Schritt eines Schweißens mit Hilfe des Laserschweißwerkzeuges (22) die Elemente (10, 12) in der Schweißzone (18) bei einer Temperatur (T3) von 1500° C während (Δt3) 2 s und über eine Tiefe von 5 mm schweißt.

3. Verfahren nach dem vorangegangenen Anspruch, **dadurch gekennzeichnet, dass** man zwischen dem Schritt eines Vorheizens und dem Schritt eines Schweißens sofort das Heizwerkzeug (20) durch Induktion mit dem Laserschweißwerkzeug (22) ersetzt und dass man zwischen dem Schritt eines Schweißens und dem Schritt eines Nachheizens sofort das Laserschweißwerkzeug (22) mit dem Werkzeug zum Heizen (20) durch Induktion ersetzt, damit die Temperatur (T) der Schweißzone (18) sich auf kontinuierliche Art und Weise entwickelt.

4. Verfahren nach Anspruch 2, **dadurch gekennzeichnet, dass** man im Verlaufe der Schritte eines Vorheizens, eines Schweißens und eines Nachheizens ein einziges gemischtes Werkzeug (20) zum Heizen durch Induktion und zum Schweißen mit Laser verwendet.

5. Heizwerkzeug durch Induktion für die Umsetzung von mindestens einem Heizschritt des Verfahrens nach den Ansprüchen 1 bis 4, bei welchem zwei koaxiale, zylindrische Elemente (12, 14), ein inneres und ein äußeres, welche dafür bestimmt sind, miteinander verbunden zu werden, in einer Schweißzone (18), in welcher sie in Kontakt sind, erhitzt werden, **dadurch gekennzeichnet, dass** es einen ringförmigen Induktionsapparat (20) aufweist, von dem mindestens ein Teil (26) eines Kerns (28) axial und radial in Richtung zur Achse (A) der koaxialen Elemente (10, 12) in der Nähe der Schweißzone (18) in einer Art und Weise vorragt, um eine lokale Erhitzung lediglich in der Nähe der Schweißzone (18) zu erhalten.

6. Heizwerkzeug nach Anspruch 5, **dadurch gekennzeichnet, dass** der Kern (28) im Wesentlichen ringförmig ist und einen kegelstumpfartigen Teil (26) aufweist, dessen kleinster Durchmesser im Wesentlichen gleich dem mittleren Durchmesser der Schweißzone (18) ist.

7. Heizwerkzeug nach einem der Ansprüche 5 oder 6, **dadurch gekennzeichnet, dass** der Kern (28) aus Kupfer ist und in seiner Dicke mindestens einen ringförmigen Abkühlungskanal (30) durch Zirkulation von Wasser aufweist.

8. Heizwerkzeug nach einem der Ansprüche 6 oder 7, **dadurch gekennzeichnet, dass** der Induktionsapparat (20) ein ringförmiges Joch (32) aus einem Material mit starker magnetischer Durchlässigkeit aufweist, in dessen Innerem der Kern (28) angeordnet ist und ausgehend von welchem der kegelstumpfartige Teil (26) des Kerns (28) axial und radial in Richtung zur Achse (A) der koaxialen Elemente (10, 12) vorragt.

9. Heizwerkzeug nach irgendeinem der Ansprüche 5 bis 8, **dadurch gekennzeichnet, dass** der Induktionsapparat (20) in seinem ringförmigen Querschnitt eine Aussparung (32) aufweist, welche dafür bestimmt ist, den Durchgang eines Laserstrahls (24) zu erlauben, der von dem Laserschweißgerät (22) herkommt, um die Zeiten eines Werkzeugwechsels zu reduzieren, die mit den Schritten des Verfahrens verbunden sind, zu welchem das Werkzeug bestimmt ist.

10. Heizwerkzeug nach Anspruch 9, **dadurch gekennzeichnet, dass** Eingangsdrähte (34) des elektrischen Stroms zur Versorgung des Induktionsapparates (20) beiderseits der Aussparung (32) angeordnet sind.

11. Heizwerkzeug nach einem der Ansprüche 9 oder 10, **dadurch gekennzeichnet, dass** es mechanisch mit dem Schweißwerkzeug (22) verbunden ist, um die Zeitdauern eines Einsetzens der Werkzeuge vor dem Schweißen der zwei Elemente (10, 12), wozu sie bestimmt sind, zu reduzieren.

## Claims

1. A method for the assembly by welding of two steel components (10, 12) with a carbon content greater than 0.42%, of the type comprising at least one stage of preheating solely of the welding zone (18) of the two components by means of an induction heating tool (20), and a stage of welding by means of a laser welding tool (22), of the type in which the preheating stage prior to the welding stage is performed by means of the induction heating tool (20) operating at a frequency of between 2.5 and 10 kHz for a duration (Δt1) of approximately 5 s bringing the welding zone to a temperature (T1) greater than 300°C to release the internal stresses in the welding zone, **characterised in that** it comprises a stage of post-heating, following the welding stage, by means of the induction heating tool (20) operating at a frequency of between 2.5 and 10 kHz for a duration (Δt4) of approximately 5s, solely of the welding zone to a temperature (T5) greater than 300°C to induce a subsequent long cooling stage which makes it possible to avoid the formation of martensite in the welding zone (18).

2. A method as claimed in the preceding claim, **characterised in that** during the welding stage using the laser welding tool (22), the components (10, 12) are welded in the welding zone (18) at a temperature (T3) of 1500°C for 2 s (Δt3) and to a depth of 5 mm.

3. A method as claimed in the preceding claim, **characterised in that** between the preheating stage and the welding stage, the laser welding tool (22) instantaneously replaces the induction heating tool (20) and iul that, between the welding stage and the post-heating stage, the induction heating tool (20) instantaneously replaces the laser welding tool (22) so that the temperature (T) of the welding zone (18) evolves continuously.

4. A method as claimed in claim 2, **characterised in that** during the preheating, welding and post-heating stages, a single mixed induction heating and laser welding tool (20) is used.

5. An induction heating tool, for the implementation of at least one heating stage of the method as claimed in claims 1 to 4, in which two coaxial inner and outer cylindrical members (12, 14), which are adapted to be assembled, are heated in a welding zone (18) in which they are ia contact, **characterised in that** it comprises an annular inductor (20), at least part (26) of a core (28) of which projects axially and radially towards the axis (A) of the coaxial components (10, 12) in the vicinity of the welding zone (18) so as to obtain local heating solely in the vicinity of the welding zone (18).

6. A heating tool as claimed in claim 5, **characterised in that** the core (28) is substantially annular and comprises a frustoconical portion (26) whose smallest diameter is substantially equal to the mean diameter of the welding zone (18).

7. A heating tool as claimed in one of claims 5 or 6, **characterised in that** the core (28) is of copper and comprises, in its thickness, at least one annular duct (30) for cooling by water circulation.

8. A heating tool as claimed in one of claims 6 or 7, **characterised in that** the inductor (20) comprises an annular block (32) of material of high magnetic permeability, within which the core (28) is disposed, and from which the frustoconical portion (26) of the core (28) projects axially and radially towards the axis (A) of the coaxial members (10, 12).

9. A heating tool as claimed in any one of claims 5 to 8, **characterised in that** the inductor (20) comprises, in its annular section, a recess (32) which is adapted to enable the passage of a laser beam (24) from the laser welding tool (22) in order to reduce the tool change times associated with the stages of the method for which the tool is adapted.

10. A heating tool as claimed in claim 9, **characterised in that** the supply wires (34) of the electrical supply current of the inductor (20) are disposed on either side of the recess (32).

11. A heating tool as claimed in one of claims 9 or 10, **characterised in that** it is mechanically coupled to the welding tool (22) to reduce the installation times of the tools prior to the welding of the two components (10, 12) for which they are adapted.
